(19)

**Europäisches Patentamt**
**European Patent Office**
**Office européen des brevets**

(11)  **EP 4 751 852 A1**

(12) **EUROPEAN PATENT APPLICATION**

(43) Date of publication:
03.06.2026 Bulletin 2026/23

(21) Application number: 25219734.8

(22) Date of filing: 01.12.2025

(51) International Patent Classification (IPC):
*B25B 23/147* (2006.01)  *G05B 19/4065* (2006.01)
*G05B 19/418* (2006.01)

(52) Cooperative Patent Classification (CPC):
**B25B 23/147; G05B 19/4065; G05B 19/418**

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 02.12.2024 SE 2430616

(71) Applicant: Atlas Copco Industrial Technique AB
105 23 Stockholm (SE)

(72) Inventors:
• **Barkefors, Annea**
13138 Nacka (SE)
• **Aldenfalk Jansson, Staffan**
703 45 Örebro (SE)
• **Nieto, Stephan**
11330 Stockholm (SE)
• **Englin, Albin**
824 55 Hudiksvall (SE)
• **Forsberg, Per**
139 35 Värmdö (SE)

(74) Representative: **Atlas Copco Industrial Technique AB**
105 23 Stockholm (SE)

(54) **METHOD FOR DETECTING WITH A DEVICE THAT A TIGHTENING TOOL SHOULD BE SUBJECTED TO MAINTENANCE**

(57)    The present disclosure relates to a method of detecting that a tightening tool (10) should be subjected to maintenance, and a device (20, 35) performing the method. The method enables computing (S104) a measure (N_i) indicating total rotation angle that can be applied by a fully functioning tool before tool maintenance is required. The computed measure (N_i) enables subsequent computation of a tool wear metric for an individual tool to determine that maintenance is required for said individual tool.

Fig. 3

EP 4 751 852 A1

**Description**

**TECHNICAL FIELD**

The present disclosure relates to a method of detecting that a tightening tool should be subjected to maintenance, and a device performing the method.

Further, a computer program is provided comprising computer-executable instructions for causing the device to perform steps of the method when the computer-executable instructions are executed on a processing unit included in the device.

Moreover, a computer program product is provided comprising a computer readable medium, the computer readable medium having the computer program embodied thereon.

**BACKGROUND**

When an electrical tool is starting to wear, e.g. a tightening tool utilized for tightening of fasteners such as bolts or screws, the drive motor of the tool will typically become less efficient and thus consume more energy. Other parts of the tool such as angle gears may also become heavier for the motor to operate, also leading to increased energy consumption for the same tightening result and may also result in low-quality tightenings.

Further, in addition to a higher energy consumption and possibly inferior tightening quality as compared to a healthy tool, the wear may eventually also cause breakage of the tool, which is highly undesirable. A challenge is thus to detect such wear at an early stage of degradation of the tool.

In the art, the well-established Palmgren-Miner linear damage model is commonly used for predicting wear of a tool, where a hypothesis is that the wear is related to the torque applied by the tool. A disadvantage of applying the Palmgren-Miner model is that the relationship between the applied torque and the expected lifetime of a tool normally is obtained from run-to-failure tests where tools are run on constant torque until tool breakdown, which is costly.

**SUMMARY**

One objective is to solve, or at least mitigate, this problem in the art and thus to provide an improved method of detecting that a tightening tool should be subjected to maintenance.

This objective is attained in a first aspect by a method of a device of detecting that a tightening tool should be subjected to maintenance. The method comprises acquiring, from a plurality of tools, data indicating torques and corresponding rotation angles applied to a fastener during each of multiple tightening operations having been performed by the tools from an instance when the tools are fully functioning until tool maintenance is required, the applied torques being normalized with a maximum supported torque of the tools, said data being acquired during normal operation of the tools, dividing the acquired torque data into a plurality of groups each representing torques having been applied at the corresponding rotation angles, determining, from the acquired data, a total rotation angle having been applied for each group since the instance when the tools were fully functioning, and computing, for each group, a measure indicating total rotation angle that can be applied by a fully functioning tool before tool maintenance is required, if the plurality of tools are operated to only apply the respective torques corresponding to each group, the measure being computed by computing a tool wear metric for each tool by dividing, for each group, the determined total rotation angle with the measure indicating total rotation angle that can be applied by a fully functioning tool before tool maintenance is required to create individual group metrics, and summing the created individual group metrics to 1, wherein the computed measure for each group enables subsequent computation of the tool wear metric for an individual tool to determine that maintenance is required for said individual tool.

This objective is attained in a second aspect by a device configured to detect that a tightening tool should be subjected to maintenance. The device comprises a processing unit operative to cause the device to acquire, from a plurality of tools, data indicating torques and corresponding rotation angles applied to a fastener during each of multiple tightening operations having been performed by the tools from an instance when the tools are fully functioning until tool maintenance is required, the applied torques being normalized with a maximum supported torque of the tools said data being acquired during normal operation of the tools, divide the acquired torque data into a plurality of groups each representing torques having been applied at the corresponding rotation angles, determine, from the acquired data, a total rotation angle having been applied for each group since the instance when the tools were fully functioning, and to compute, for each group, a measure indicating total rotation angle that can be applied by a fully functioning tool before tool maintenance is required, if the tool is operated to only apply torques corresponding to each group, the measure being computed by computing a tool wear metric for each tool by dividing, for each group, the determined total rotation angle with the determined measure indicating total rotation angle that can be applied by a fully functioning tool before tool maintenance is required to create individual group metrics, and summing the created individual group metrics to 1, wherein the computed measure for each group enables subsequent computation of the tool wear metric for an individual tool to determine that maintenance is required for said individual tool.

Advantageously, for each torque group, a measure is computed that indicates total rotation angle that can be applied by a fully functioning tool before a next tool maintenance session is required, if the tool is only operated to apply torques corresponding to each torque group. Beneficially, the measure indicating total rotation angle that can be applied until the next tool maintenance session must be invoked is determined based on historical tool data acquired during normal operation of the tools. As mentioned hereinabove, in the prior art, data obtained from run-to-failure tests is used where tools are operated at constant torque until tool breakdown, which is costly.

In an embodiment, the computing of the tool wear metric for an individual tool comprises acquiring data indicating torques and corresponding rotation angles applied by the individual tool being fully functioning and accumulating the rotation angles applied by said individual tool in each torque group to attain a total rotation angle applied by the individual tool in each group, and computing said tool wear metric based on the total rotation angle applied by the individual tool in each group and said computed measure for each group, wherein if the tool wear metric reaches 1, maintenance of said individual tool is required.

In an embodiment, said measure is computed by solving a linear equation system where a sum, over all individual groups, of the determined total rotation angle divided with said measure equals 1.

In an embodiment, the linear equation system is solved using all tools comprised in said plurality of tools.

In an embodiment, said plurality of tools is greater than the number of groups in which the acquired torque data is divided, in order to provide an overdetermined equation system.

In an embodiment, the linear equation system is solved by means of the least squared method (or similar methods).

In an embodiment, the applied torques are being normalized between 0 and 1.

In an embodiment, an alert is provided indicating that the tool should be subjected to maintenance.

In a third aspect, a computer program is provided comprising computer-executable instructions for causing a device to perform steps recited in the method of the first aspect when the computer-executable instructions are executed on a processing unit included in the device.

In a fourth aspect, a computer program product is provided comprising a computer readable medium, the computer readable medium having the computer program according to the third aspect embodied thereon.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

## BRIEF DESCRIPTION OF THE DRAWINGS

Aspects and embodiments are now described, by way of example, with reference to the accompanying drawings, in which:

Figure 1 illustrates a tightening tool configured to apply a torque to a fastener, in which tool embodiments may be implemented;

Figure 2 illustrates dividing applied torque into different groups according to an embodiment;

Figure 3 shows a flowchart illustrating a method of training of a data model in order to enable detecting that a tightening tool should be subjected to maintenance according to an embodiment; and

Figure 4 shows a flowchart illustrating a method of detecting that a tightening tool should be subjected to maintenance according to an embodiment by using the trained data model.

## DETAILED DESCRIPTION

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

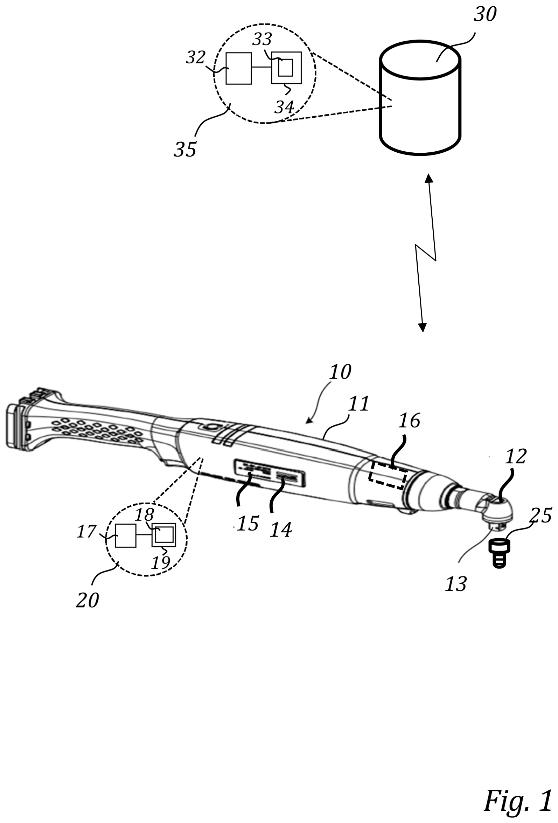

Figure 1 illustrates an industrial tool in the form of a tightening tool 10 configured to apply a torque to a fastener such as a bolt 25 for tightening a joint, for which tool embodiments may be implemented.

The tightening tool 10 may be cordless or electrically powered via a cord and has a main body 11 and a tool head 12. The tool head 12 has an output shaft 13 with a socket (not shown) configured to be rotatably driven by an electric motor 16 arranged inside the main body 11 to apply the torque to the bolt 25.

The tightening tool 10 may be arranged with a display 14 via which an operator of the tool 10 may be presented with information relating to operation of the tool 10, and an interface 15 via which the operator may input data to the tool 10.

The tightening tool 10 may further be equipped with a communication device in the form of a radio transmitter/receiver (not shown) for wirelessly transmitting operational data, such as applied torque, angles and/or current consumption to a remotely located controller such as a cloud server 30 or a device such as a server executing on the premises. Alternatively, communication between the tool 10 and the controller 32 may be undertaken via a wired connection.

Thus, the tool 10 may for instance communicate measured operational data to the controller 32 for further evaluation while the controller 32 e.g. may send operational settings to be applied by the tool 10 or instructions to be displayed to the operator via the display 14, or even automatically configure the tool 10. As is understood, the method of determining a configuration of the tool 10 according to embodiments may be performed in the tool 10 or in the cloud server 30 (or even in combination where some steps are performed in one device and others are performed in the other). Thus, the tool 10 is typically equipped with a control device 20 and the cloud server 30 comprises a similar control device 35 housing the same or similar data processing components, as will be described in the following.

The steps of the method to be described in the following as performed by the tool 10 and/or the cloud server 30 are in practice performed by a control device 20 and/or 35, respectively, comprising a processing unit 17, 32 embodied in the form of one or more microprocessors arranged to execute a computer program 18, 33 downloaded to a storage medium 19, 34 associated with the microprocessor, such as a Random Access Memory (RAM), a Flash memory or a hard disk drive. The processing unit 17, 32 is arranged to cause the tool 10 and/or cloud server 30 to carry out the method according to embodiments when the appropriate computer program 18, 33 comprising computer-executable instructions is downloaded to the storage medium 19, 34 and executed by the processing unit 17, 32. The storage medium 19, 34 may also be a computer program product comprising the computer program 18, 33. Alternatively, the computer program 18 may be transferred to the storage medium 19, 34 by means of a suitable computer program product, such as a Digital Versatile Disc (DVD) or a memory stick. As a further alternative, the computer program 18, 33 may be downloaded to the storage medium 19, 34 over a network. The processing unit 17, 32 may alternatively be embodied in the form of a digital signal processor (DSP), an application specific integrated circuit (ASIC), a field-programmable gate array (FPGA), a complex programmable logic device (CPLD), etc. The control device 20, 35 is communicatively connected to the interface for external communication, for instance from the tool 10 to the cloud server 30 and vice versa.

The control device 20 may be arranged inside the tightening tool 10 or in connection to the tool 10, for instance as a control device 20 attached to an external side of the main body 11 of the tool 10.

The processing unit 17 is in communicative connection with one or more internal sensors (not shown) for measuring the torque applied to the bolt 25 and a rotation angle of the output shaft 13 of the tightening tool 10 upon applying the torque, as well as a sensor measuring current consumption of the tool 10.

Now upon an operator using the tightening tool 10 to tighten a fastener such as the bolt 25, it is important that the tightening operation is performed correctly for the tightened bolt 25 to maintain its fastening durability. If not, there is a risk that the tightening becomes poor which in worst case may cause the bolt 25 to unscrew. Thus, it is crucial that the bolt 25 is correctly tightened and if not, it is desirable to attain an indication accordingly such that the operator may utilize the tool 10 to correctly retighten the bolt 25. Commonly, an incorrect tightening is referred to as a not ok (NOK) tightening, while a correct tightening conversely is referred to as OK.

When the tool 10 is starting to wear, numerous negative consequences may occur. For instance, the drive motor 16 of the tool will typically become less efficient and thus consume more current/energy. Other parts of the tool 10 such as angle gears may also become heavier for the motor 16 to operate, also leading to increased energy consumption for the same tightening result. Such wear may be difficult to detect.

Further, a tool 10 being subjected to wear may provide inferior tightening quality as compared to a healthy tool. Also, if the tool 10 is subjected to substantial wear, the wear may cause tool breakage, which is highly undesirable. As is understood, there are many reasons as to why it is beneficial to detected wear. A challenge is thus to detect wear at an early stage of degradation of the tool.

As previously mentioned, a commonly used approach for detecting wear in a tool such as the tightening tool 10 illustrated in Figure 1 is by applying the well-established Palmgren-Miner linear damage model, where a hypothesis is that a tool is worn out faster if the tool is controlled to operate at high torques relative to the tool's maximum supported torque.

A disadvantage of applying the Palmgren-Miner model is that the relationship between the applied torque and the expected lifetime of a tool normally is obtained from run-to-failure tests where tools are operated at constant torque until tool breakdown, which is costly.

In an embodiment, an indication of wear of the tool 10 will be detected based on real production data from previous tightening operations performed by other similar tools that have been used until failure during normal operational conditions, rather than run-to-failure tests, which is far more cost efficient. In other words, rather than using run-to-failure test data, wear will be detected based on tool data acquired during normal operation of tools having been run until failure.

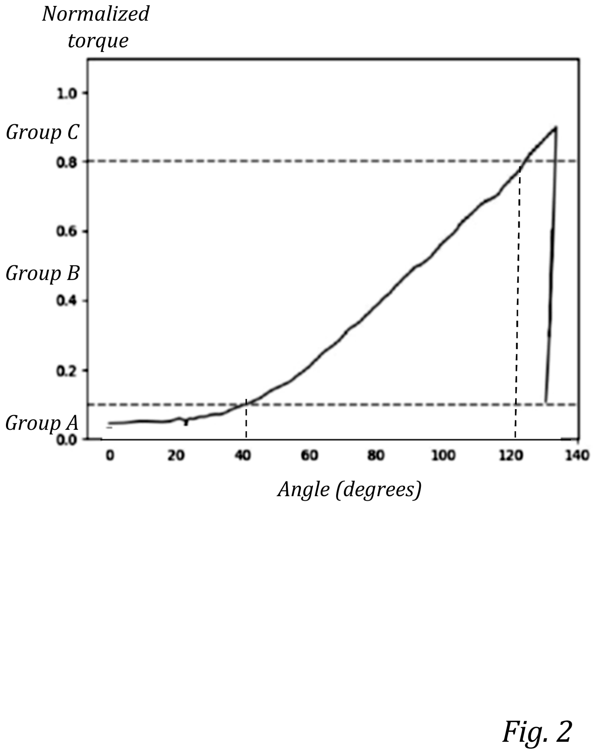

Figure 2 illustrates a curve referred to as a tightening trace of a tightening operation performed by the tool 10, which trace is formed by data indicating torques and corresponding rotation angles applied to the bolt 25 during the tightening operation. As previously mentioned, such data may be collected by sensors in the tool 10. The tightening trace of Figure 2 may be made up or tens or even hundreds of torque samples (and corresponding angle samples) being collected by the tool 10 during a tightening operation.

In the tightening trace of Figure 2, each applied torque during the tightening operation is normalized with a maximum supported torque of the tool 10. In other words, assuming that the maximum torque that can be applied by the tool 10 is 100 Nm, an applied torque of 100 Nm would be represented by 1, an applied torque of 50 Nm would be represented by 0.5, and so on.

In the graph of Figure 2, the applied torque is divided in into three different groups A, B, C according to an embodiment to be described in detail. As is understood, this is for illustrational purposes only, and the applied torque may be divided in more groups than three.

The torque applied by a tool 10 will typically be configured to vary throughout the tightening. Hence, during one tightening operation, the tool 10 first applies a torque associated with group A, then a torque associated with group B, and finally a torque associated with group C, each with corresponding rotation angles. Each tightening operation being performed results in a new tightening trace being generated. The well-established Palmgren-Miner model assumes that wear on a tool 10 is higher if the tool 10 applies a torque closer to its maximum supported torque as compared to when the tool 10 applies a lower torque.

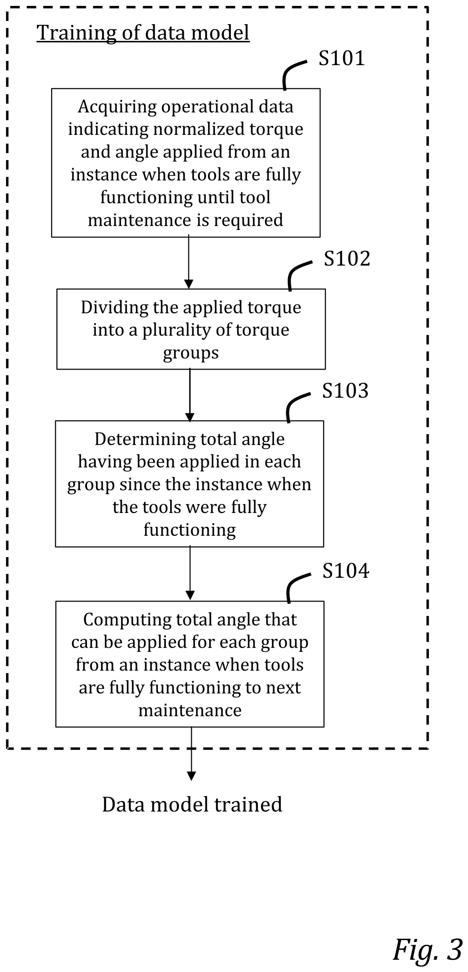

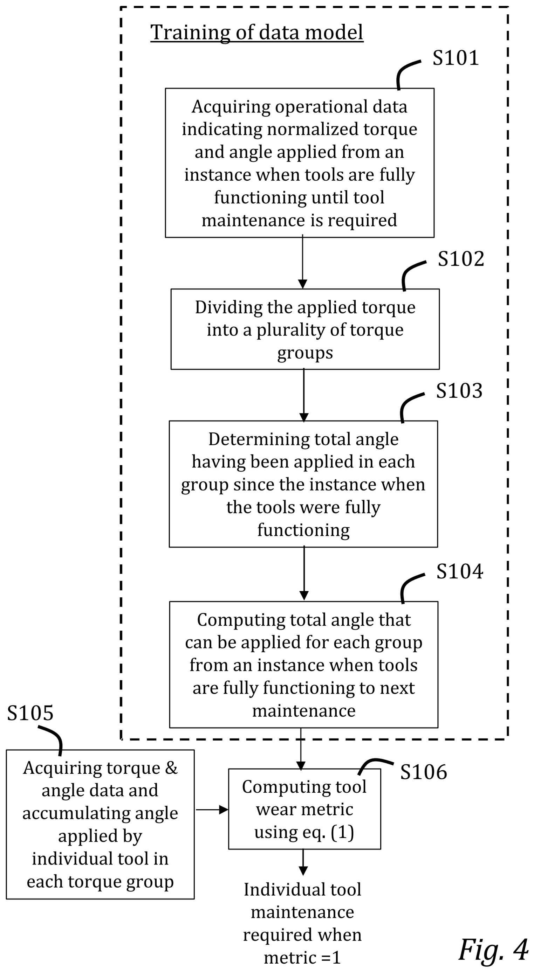

Figure 3 shows a flowchart illustrating a method of detecting wear of a tool - and thus when the tool 10 should be subjected to maintenance - according to an embodiment. Figure 3 illustrates a first part of the method where a data model allowing detection of wear is trained (using historical operation data of a set of tools referred to as the training set) while Figure 4 to be described in detail hereinbelow also illustrates the second part of the method where the trained data model is utilized for detecting wear of an individual tool.

As further will be described in more detail, for each group A, B, C into which the torque is divided, torque (and corresponding angle) data must be collected from at least one tool. Thus, if the torque data is divided into three groups A, B, C as illustrated in Figure 2, then each group must be represented by at least one tool. However, in practice, in order to ultimately attain a robust data model and to mitigate the impact of noise and individual tools, tens or even hundreds of different tools may be included in the training set.

In the embodiments to be described below, it is assumed that the control device 35 of the cloud server 30 collects data from the tools in the training set for training the data model.

Thus, in a first step S101, the control device 35 of the server 30 acquires data indicating torques and corresponding rotation angles applied to fasteners having been tightened during each of a number of tightening operations applied by the tools during a time period when the tools are fully functioning until tool maintenance is required. The applied torque is normalized with the maximum supported torque of the tool 10 to attain a value between 0 and 1 (or even > 1 if a tool is operated at a higher torque than the tool actually supports). As described, this data is real historical production data acquired during normal operation of the tool 10, and the control device 35 performs this data acquisition for each of the plurality of tools being included in the training set.

Hence, the data is acquired, from each tool, either from an instance when the tool was new and thus fully functioning up until a first tool maintenance session, or during a time period between two consecutive tool maintenance sessions (the tool thus being fully functioning after the former tool maintenance session having been conducted and being broken again when reaching the point in time for the latter maintenance session). As is understood, the data may even be collected from a time period that occurred years ago.

One approach is to select service instances related to a specific part of the tool, for instance service instances associated with angle gears. That is, only periods are considered which occurs between two service instances where the angle gears have been broken or replaced in the first and second service instance. Alternatively, a period is selected from the first time the tool is used until the first service instance where the angle gears have been broken/replaced. In other words, if a service is performed on e.g. the motor in this period, it is disregarded, since the data model will be adapted to detecting wear in the angle gears. The rationale behind this is that different parts of the tool 10 have different lifespans, wherein the data model is trained to learn the behaviour of the different parts.

In S102, the acquired torque data is divided into a plurality k of groups, in this example k =3, where each group A, B and C represents a range of torques having been applied to the bolt 25, in this exemplifying embodiment 0-10%, 10-80% and >80%, respectively, of the maximum applicable torque.

As illustrated in Figure 2, for a single tightening operation, a tool applies a rotation angle of about 40° when applying torques associated with torque group A, while applying a rotation angle of about 80° in torque group B, and a rotation angle of 10° in torque group C.

Now, in order to be able to subsequently compute a tool wear metric indicating whether or not a tool 10 should be subjected to maintenance, the total rotation angle n_i that has been applied in each group since the last maintenance session occurred (i.e. since the last time the tool was fully functioning) is determined in S103.

As is understood, this may be represented by total rotation angle in degrees, or by the number of rotations having been applied, where rotation = angle/360.

Then, in S104, for each torque group i, a measure N_i is computed that indicates total rotation angle that can be applied by a fully functioning tool before a next tool maintenance session is required, if the tool is only operated to apply torques corresponding to torque group i. Advantageously, the measure N_i indicating total rotation angle that can be applied until the next tool maintenance session must be invoked is determined based on historical tool data acquired during normal operation of the tools. As mentioned hereinabove, in the prior art, data obtained from run-to-failure tests is used where tools are operated at constant torque until tool breakdown, which is costly.

Now, the control device 35 is then configured to compute the measure N_i based on a tool wear metric in S104, which in an exemplifying embodiment may be computed as:

$$tool\ wear = \frac{n\_1}{N\_1} + \frac{n\_2}{N\_2} + \cdots + \frac{n\_k}{N\_k}, \qquad \text{equation (1)}$$

wherein if the above tool wear metric equals 1, tool maintenance should be conducted. In this particular example, k = 3 since three torque groups A, B, C are utilized. As is understood, group A corresponds to k = 1, while group B corresponds to k = 2 and group C corresponds to k = 3.

In other words, the control device 35 of the server 30 computes a tool wear metric in S104 by dividing, for each group i, the determined total rotation angle n_i with the measure indicating total rotation angle that can be applied by a functioning tool before the next tool maintenance session should be conducted to create individual group metrics, and then summing the created individual group metrics to compute the above tool wear metric, which should equal 1. Reformulating the computation of the tool wear metric of equation (1) to form an equation system:

$$\begin{bmatrix} n_A^1 & n_B^1 & n_C^1 \\ n_A^2 & n_B^2 & n_C^2 \\ \vdots & \vdots & \vdots \\ n_A^t & n_B^t & n_C^t \end{bmatrix} \begin{bmatrix} N_A^{-1} \\ N_B^{-1} \\ N_C^{-1} \end{bmatrix} = \begin{bmatrix} 1 \\ 1 \\ \vdots \\ 1 \end{bmatrix}$$

where t denotes the number of tools being utilized in the training set (i.e. the number of tools from which the tightening trace data of Figure 2 is acquired).

As can be concluded, if three groups A, B, C are utilized, at least t = 3 tools must be included in the training set in order to create an equation system where three equations are formed for solving the three unknown measures $N_A, N_B, N_C$. However, as previously mentioned, to create a robust data model, a 100+ tools may practically be included in the training set, thereby creating a (greatly) overdetermined equation system. Hence, with this equation system, measures $N_A, N_B, N_C$ are computed in S104 and the data model has thus been trained.

Now, once the measures $N_A, N_B, N_C$ of each group has been computed in S104, the data model is trained and can subsequently be utilized for computing the tool wear metric of an individual tool.

Thus, with reference to the flowchart of Figure 4, the data indicating torques and corresponding rotation angles applied by an individual tool being fully functioning is acquired in S105, and the rotation angle applied by the individual tool in each torque group is accumulated to attain a total rotation angle applied by the individual tool in each group A, B, C.

Thereafter in S106, the tool wear metric of equation (1) is computed based on the total rotation angle applied by the individual tool in each group and the measure N_i computed for each group in S104. Again, after thousands of tightenings have been performed, the total rotation angle of each group has greatly added up, resulting in the tool wear metric of equation (1) being computed to 1 by using the measures $N_A, N_B, N_C$ of the trained data model, which indicates that maintenance is required for the individual tool. As is understood, steps S105 and S106 are repeatedly performed until the tool wear metric reaches 1.

Advantageously, with this embodiment, a data-driven approach is provided where historical production data with varying torque loads is acquired for computing a tool wear metric. This approach eliminates the need to purchase tools and wear the tools out in run-to-failure tests to obtain data for determining when to schedule maintenance, and hence leads to cost savings and easier modelling for determining when the tool 10 should be subjected to maintenance.

Further advantageous is that the utilization of tool data acquired during normal operation of the tool 10, i.e. real production data, provides insights into the normal usage of tools, where tools are being operated at varying torque loads. In contrast, relying on laboratory tests can result in inaccurate modelling due to idealized conditions in a lab setting.

In an embodiment, the measure N_i being computed with the equation system illustrated hereinabove is determined according to the following.

The measure N_1, N_2 and N_3 for each individual group A, B and C is determined by solving a system of linear equations having the form Ax = b. The matrix A contains all the values n_i, where i = 1, ..., k, acquired from the data representing torque/angle pairs of all individual tightening operations having occurred since the last maintenance session, where each row in the matrix corresponds to a tool having been subjected to maintenance, typically due to the tool being broken.

The vector b contains ones, since tools being subjected to maintenance (i.e. possibly caused by tool breakdown) have a tool wear metric of one. Finally, x contains the measure N_i, i = 1, .., k, and is thus the vector to be found. To be more specific, x is the inverse of N_i, i.e. 1/N_1, ..., 1/N_k, in order for the equation system to be on the same form as stated in the equation above for the computed tool wear metric. This results in the equation system set out hereinabove.

To obtain a stable solution for N_i, and avoid overfitting, it is preferred to have a large number of tools having been subjected to maintenance or even broken down relative to the number of torque groups k, which results in an overdetermined system of equations. Since such a system does not have a unique solution, the measures N_i may e.g. be found by means of the least squared method or similar method(s). Having found N_i allows to calculate the wear score of a tool at a given point in time, and thus also predict when the next maintenance session should be conducted, as described hereinabove with reference to steps S105 and S106 of Figure 4.

In an embodiment, a trained machine-learning (ML) model or artificial intelligence (AI) is used to determine from acquired torque and current values by using equation (1) when a tightening tool 10 should be subjected to maintenance. For instance, assuming that a tool wear metric of, say, 0.68 is computed; a prediction of when 1 will be reached and an individual tool thus requires maintenance is a task well-suited for ML and/or AI.

Any such ML and/or AI operations, as well as the performing of the steps S101- S106 of the method according to embodiments may be performed locally by the control device 20, or by the cloud server 30. The determining of whether or not maintenance should be performed may be immediately communicated to the operator of the tool 10 via e.g. the display 14. As a consequence, the operator may unscrew the bolt 25 and perform a new tightening program in order to attain an adequate tightening should the tool 10 be indicated to be faulty.

It is envisaged that the steps S101-S106 of the method according to embodiments may be performed by the control device 20 arranged in the tool 10 itself. However, it may also be envisaged that the required torque and angle values are measured by the tool 10 and then communicated via wireless transmitter to the cloud server 30 being equipped with a corresponding control device 35 for performing all steps S101-S106, which would relieve the processing unit 17 of the tool 10 from the computational burden.

In an embodiment, an alert that the tool 10 should be subjected to maintenance may be provided to an operator of the tightening tool, to the tightening tool itself, to a supervision control room or to the remote cloud server 30.

The aspects of the present disclosure have mainly been described above with reference to a few embodiments and examples thereof. However, as is readily appreciated by a person skilled in the art, other embodiments than the ones disclosed above are equally possible within the scope of the invention, as defined by the appended patent claims.

Thus, while various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

**Claims**

1. A method of a device (20, 35) of detecting that a tightening tool (10) should be subjected to maintenance, the method comprising:

    acquiring (S101), from a plurality of tools, data indicating torques and corresponding rotation angles applied to a fastener during each of multiple tightening operations having been performed by the tools from an instance when the tools are fully functioning until tool maintenance is required, the applied torques being normalized with a maximum supported torque of the tools said data being acquired during normal operation of the tools;
    dividing (S102) the acquired torque data into a plurality of groups (i) each representing torques having been applied at the corresponding rotation angles;
    determining (S103), from the acquired data, a total rotation angle (n_i) having been applied for each group (i) since the instance when the tools were fully functioning; and
    computing (S104), for each group, a measure (N_i) indicating total rotation angle that can be applied by a fully functioning tool before tool maintenance is required, if the tool is operated to only apply torques corresponding to each group;

the measure being computed by computing a tool wear metric for each tool by dividing, for each group, the determined total rotation angle ($n\_i$) with the measure ($N\_i$) indicating total rotation angle that can be applied by a fully functioning tool before tool maintenance is required to create individual group metrics, and summing the created individual group metrics to 1, wherein the computed measure ($N\_i$) for each group enables subsequent computation of the tool wear metric for an individual tool to determine that maintenance is required for said individual tool.

2. The method of claim 1, the computing of the tool wear metric for an individual tool comprising:

   acquiring (S105) data indicating torques and corresponding rotation angles applied by the individual tool being fully functioning and accumulating the rotation angles applied by said individual tool in each torque group to attain a total rotation angle applied by the individual tool in each group; and
   computing (S106) said tool wear metric based on the total rotation angle applied by the individual tool in each group and said computed (S104) measure ($N\_i$) for each group, wherein if the tool wear metric reaches 1, maintenance of said individual tool is required.

3. The method of claims 1 or 2, wherein said measure ($N\_i$) is computed (S104) by:
   solving a linear equation system where a sum, over all individual groups, of the determined total rotation angle ($n\_i$) divided with said measure ($N\_i$) equals 1.

4. The method of claim 3, wherein the linear equation system is solved using all tools comprised in said plurality of tools.

5. The method of claims 4, wherein said plurality of tools is greater than the number of groups in which the acquired torque data is divided, in order to provide an overdetermined equation system.

6. The method of any one of claims 3-5, wherein the linear equation system is solved by means of the least squared method.

7. The method of any one of the preceding claims, wherein the applied torques are being normalized between 0 and 1.

8. The method of any one of the preceding claims, further comprising providing an alert indicating that the tool (10) should be subjected to maintenance.

9. A computer program (18, 33) comprising computer-executable instructions for causing the device (20, 35) to perform steps recited in any one of claims 1-8 when the computer-executable instructions are executed on a processing unit (17, 32) included in the device (20, 35).

10. A computer program product comprising a computer readable medium (19, 34), the computer readable medium having the computer program (18, 33) according to claim 9 embodied thereon.

11. A device (20, 35) configured to detect that a tightening tool (10) should be subjected to maintenance, the device (20, 35) comprising a processing unit (17, 32) operative to cause the device (20, 35) to:

    acquire (S101), from a plurality of tools, data indicating torques and corresponding rotation angles applied to a fastener during each of multiple tightening operations having been performed by the tools from an instance when the tools are fully functioning until tool maintenance is required, the applied torques being normalized with a maximum supported torque of the tools said data being acquired during normal operation of the tools;
    divide (S102) the acquired torque data into a plurality of groups (i) each representing torques having been applied at the corresponding rotation angles;
    determine (S103), from the acquired data, a total rotation angle ($n\_i$) having been applied for each group (i) since the instance when the tools were fully functioning; and to
    compute (S104), for each group, a measure ($N\_i$) indicating total rotation angle that can be applied by a fully functioning tool before tool maintenance is required, if the tool is operated to apply torques corresponding to each group;
    the measure being computed by computing a tool wear metric for each tool by dividing, for each group, the determined total rotation angle ($n\_i$) with the measure ($N\_i$) indicating total rotation angle that can be applied by a fully functioning tool before tool maintenance is required to create individual group metrics, and summing the created individual group metrics to 1, wherein the computed measure ($N\_i$) for each group enables subsequent computation of the tool wear metric for an individual tool to determine that maintenance is required for said individual tool.

12. The device (20, 35) of claim 11, further being operative to, when computing the tool wear metric for an individual tool:

acquire (S105) data indicating torques and corresponding rotation angles applied by the individual tool being fully functioning and accumulating the rotation angles applied by said individual tool in each torque group to attain a total rotation angle applied by the individual tool in each group; and to
compute (S106) said tool wear metric based on the total rotation angle applied by the individual tool in each group and said computed (S104) measure ($N\_i$) for each group, wherein if the tool wear metric reaches 1, maintenance of said individual tool is required.

13. The device (20, 35) of claims 11 or 12, further being operative to, when computing (S104) said measure ($N\_i$):
solve a linear equation system where a sum, over all individual groups, of the determined total rotation angle ($n\_i$) divided with said measure ($N\_i$) equals 1.

14. The device (20, 35) of claim 13, further being operative solving the linear equation system using all tools comprised in said plurality of tools.

15. The device (20, 35) of claim 14, wherein said plurality of tools is configured to be greater than the number of groups in which the acquired torque data is divided, in order to provide an overdetermined equation system.

*Fig. 1*

*Fig. 2*

**Training of data model**

S101

Acquiring operational data indicating normalized torque and angle applied from an instance when tools are fully functioning until tool maintenance is required

S102

Dividing the applied torque into a plurality of torque groups

S103

Determining total angle having been applied in each group since the instance when the tools were fully functioning

S104

Computing total angle that can be applied for each group from an instance when tools are fully functioning to next maintenance

Data model trained

*Fig. 3*

**Training of data model**

S101

Acquiring operational data indicating normalized torque and angle applied from an instance when tools are fully functioning until tool maintenance is required

S102

Dividing the applied torque into a plurality of torque groups

S103

Determining total angle having been applied in each group since the instance when the tools were fully functioning

S104

Computing total angle that can be applied for each group from an instance when tools are fully functioning to next maintenance

S105

Acquiring torque & angle data and accumulating angle applied by individual tool in each torque group

S106

Computing tool wear metric using eq. (1)

Individual tool maintenance required when metric =1

*Fig. 4*

Europäisches
Patentamt

European
Patent Office

Office européen
des brevets

# EUROPEAN SEARCH REPORT

**Application Number**

EP 25 21 9734

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 118 428 529 A (WUHAN YICHUANG ZHILIAN INFORMATION TECH CO LTD) 2 August 2024 (2024-08-02) * claims 1, 5, 8 * * paragraph [0001] - paragraph [0005] * * paragraph [0009] - paragraph [0017] * * paragraph [0026] - paragraph [0035] * * paragraph [0041] * * paragraph [0049] - paragraph [0090] * ----- | 1-15 | INV. B25B23/147 G05B19/4065 G05B19/418 |
| A | US 2021/199416 A1 (BOISARD SIMON [FR] ET AL) 1 July 2021 (2021-07-01) * paragraph [0088]; claims 1,6-7,10 * * paragraph [0001] - paragraph [0002] * * paragraph [0004] * * paragraph [0013] - paragraph [0015] * * paragraph [0034] * * paragraph [0065] * * paragraph [0067] * * paragraph [0070] - paragraph [0071] * * paragraph [0121] - paragraph [0123] * * paragraph [0126] - paragraph [0127] * * paragraph [0161] - paragraph [0327] * ----- | 1-15 | |
| | | | TECHNICAL FIELDS SEARCHED (IPC) |
| A | EP 3 501 745 A1 (RENAULT GEORGES ETS [FR]) 26 June 2019 (2019-06-26) * claims 1-4,12-13,15-16,18,21-22 * * paragraph [0001] - paragraph [0013] * * paragraph [0038] * * paragraph [0046] - paragraph [0051] * * paragraph [0055] - paragraph [0056] * * paragraph [0076] * * paragraph [0078] - paragraph [0079] * * paragraph [0093] * * paragraph [0127] - paragraph [0132] * * paragraph [0143] * * paragraph [0216] - paragraph [0231] * * paragraph [0235] - paragraph [0236] * ----- -/-- | 1-15 | B25B G05B B23P |

The present search report has been drawn up for all claims

| Place of search | Date of completion of the search | Examiner |
|---|---|---|
| Munich | 9 April 2026 | Heinzelmann, Eric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................................

& : member of the same patent family, corresponding document

EPO FORM 1503 03.82 (P04C01)

page 1 of 2

Europäisches Patentamt

European Patent Office

Office européen des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2023/072480 A1 (ATLAS COPCO IND TECHNIQUE AB [SE]) 4 May 2023 (2023-05-04)<br>* claims 1-2,15-17 *<br>* paragraph [0001] - paragraph [0008] *<br>* paragraph [0020] *<br>* paragraph [0032] - paragraph [0034] *<br>* paragraph [0051] - paragraph [0057] *<br>* paragraph [0067] *<br>* paragraph [0071] - paragraph [0146] *<br>----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 9 April 2026 | Heinzelmann, Eric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 9734

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2026

| Patent document cited in search report | | Publication date | Patent family member(s) | | Publication date |
|---|---|---|---|---|---|
| CN 118428529 | A | 02-08-2024 | NONE | | |
| US 2021199416 | A1 | 01-07-2021 | EP | 3842185 A1 | 30-06-2021 |
| | | | FR | 3105750 A1 | 02-07-2021 |
| | | | US | 2021199416 A1 | 01-07-2021 |
| EP 3501745 | A1 | 26-06-2019 | EP | 3501745 A1 | 26-06-2019 |
| | | | FR | 3075678 A1 | 28-06-2019 |
| | | | JP | 7441603 B2 | 01-03-2024 |
| | | | JP | 2019113551 A | 11-07-2019 |
| WO 2023072480 | A1 | 04-05-2023 | CN | 118234598 A | 21-06-2024 |
| | | | EP | 4422831 A1 | 04-09-2024 |
| | | | KR | 20240090561 A | 21-06-2024 |
| | | | US | 2024335926 A1 | 10-10-2024 |
| | | | WO | 2023072480 A1 | 04-05-2023 |

EPO FORM P0459

For more details about this annex : see Official Journal of the European Patent Office, No. 12/82